(19) **Europäisches Patentamt / European Patent Office / Office européen des brevets**

(11) **EP 2 785 200 B1**

(12) **EUROPEAN PATENT SPECIFICATION**

(45) Date of publication and mention
of the grant of the patent:
**28.03.2018 Bulletin 2018/13**

(21) Application number: **12795720.7**

(22) Date of filing: **27.11.2012**

(51) Int Cl.:
*A23L 27/30* *(2016.01)*

(86) International application number:
**PCT/US2012/066635**

(87) International publication number:
**WO 2013/082019 (06.06.2013 Gazette 2013/23)**

(54) **IMPROVED FLAVOR NATURAL TABLETOP SWEETENER**

NATÜRLICHER SÜSSSTOFFSPENDER MIT VERBESSERTEM AROMA

EDULCORANT DE TABLE À FLAVEUR NATURELLE AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2011 US 201161564096 P**

(43) Date of publication of application:
**08.10.2014 Bulletin 2014/41**

(73) Proprietor: **Tate & Lyle Ingredients Americas LLC
Hoffmann Estates, IL 60192 (US)**

(72) Inventors:
• **NEHMER, Warren L.
Decatur, IL 62522 (US)**
• **KING, Christopher Robert
Decatur, IL 62522 (US)**
• **HUTTON, Thomas Kennedy
Lafayette, IN 47905 (US)**

(74) Representative: **Nieuwenhuys, William Francis
Marks & Clerk LLP
90 Long Acre
London
WC2E 9RA (GB)**

(56) References cited:
**EP-A1- 2 156 751          WO-A1-2005/103304
WO-A1-2010/025158      WO-A2-2011/048616**

• **DATABASE WPI Week 199645 Thomson Scientific, London, GB; AN 1996-453287 XP002693504, & KR 950 000 449 B1 (MIWON CO LTD) 20 January 1995 (1995-01-20)**
• **DATABASE WPI Week 198311 Thomson Scientific, London, GB; AN 1983-26295K XP002693505, & JP 58 020170 A (FUKUSHIMA T) 5 February 1983 (1983-02-05)**
• **MATSUO T ET AL: "D-psicose is a rare sugar that provides no energy to growing rats", JOURNAL OF NUTRITIONAL SCIENCE AND VITAMINOLOGY, UNIVERSITY OF TOKYO PRESS, TOKYO, JP, vol. 48, no. 1, 1 February 2002 (2002-02-01), pages 77-80, XP002973184, ISSN: 0301-4800**
• **NAGATA M: "Composition useful as food additive and health food for treating diabetes and obesity, contains D-psicose and/or its derivatives which suppresses rapid increase of blood glucose level after ingesting with saccharides", WPI / THOMSON,, vol. 2005, no. 57, 11 August 2008 (2008-08-11), XP002597558,**

EP 2 785 200 B1

**Description**

BACKGROUND OF THE INVENTION

Numerous reduced-calorie sweeteners are commercially available in powdered or granular form for use by consumers, for example in servings of coffee or tea. These currently commercially available "tabletop" sweeteners, often provided in individual packets, employ natural or non-natural non-carbohydrate sweeteners that, although sweet, typically carry an off-flavor that is particularly apparent when the sweeteners are placed directly on the tongue. Perception of off-flavors is somewhat subjective, and includes such phenomena as the sensation of a sudden sharp onset of sweetness, essentially a sweetness "burst" or "explosion". Such an effect is typically not noticed when the non-carbohydrate sweeteners are in dissolved form, such as in a food or beverage, but is frequently noticeable when the dry sweetener is tasted directly. Other off-flavors such as mustiness and/or bitterness may also be problematic. The development of a natural tabletop sweetener with improved flavor, especially when placed directly on the tongue, would therefore be of significant commercial value.

WO 2011/048616 describes a sweetener particle comprising a sucrose core, an intermediate layer comprising sucrose and rebaudioside A and an outer layer comprising sucrose.

SUMMARY OF THE INVENTION

In first and second aspects, the invention provides a sweetener particle including a solid core, a first solid layer on the solid core, and a second solid layer on the first solid layer, the second solid layer defining an outermost surface of the particle; wherein the solid core, the first solid layer and the second solid layer are as described in claims 1-10.

In third and fourth aspects, the invention provides methods of making sweetener particles as described in claims 12 and 13.

In a fifth aspect, the invention provides a food product including the sweetener particle as described above and one or more foodstuffs.

BRIEF DESCRIPTION OF THE DRAWINGS

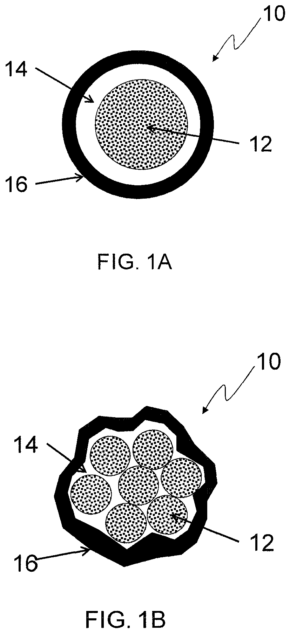

Figure 1A shows a first embodiment of a sweetener particle.
Figure 1B shows a second embodiment of a sweetener particle.

DETAILED DESCRIPTION OF THE INVENTION

The inventors have found that many tabletop sweeteners currently on the market, produced using natural and/or non-natural non-carbohydrate sweeteners, often have an undesirable taste profile when placed directly on the tongue. By coating particles comprising non-carbohydrate sweeteners with a sweet carbohydrate having a pleasant natural sweet taste, the overall perception of taste improves dramatically. The initial taste of the sweet carbohydrate, for example sucrose, has been found to effectively diminish the perception of off-flavor resulting from the non-carbohydrate sweetener.

Accordingly, the invention provides sweetener particles comprising a solid core, a first solid layer on the solid core, and a second solid layer on the first solid layer. In a first aspect the solid core consists of an edible carbohydrate that is psicose, the first solid layer includes a non-carbohydrate sweetener and optionally a second edible carbohydrate, and the second solid layer includes a sweet carbohydrate and does not include a non-carbohydrate sweetener. In a second aspect, the solid core comprises a first edible carbohydrate, the first solid layer comprises a non-carbohydrate sweetener and the second solid layer consists of a sweet carbohydrate that is psicose. The sweetener particles may contain edible carbohydrates and non-carbohydrate sweetener in any proportion, but typically the relative amounts will be such that the particles have a perceived sweetness of at least 2X that of sucrose, or at least 5X, or at least 10X on an equal weight basis. Typically, the perceived sweetness will be at most 100X, or at most 50X, or at most 30X. Each of the constituent parts of the sweetener particles will now be described, followed by a description of suitable methods for forming the particles.

Edible Carbohydrate

Edible carbohydrates include monosaccharides, disaccharides, oligosaccharides and polysaccharides. For purposes of this invention, derivatives of edible carbohydrates formed by functionalization of one or more saccharide hydroxyls of a carbohydrate with substituent(s) consisting of C, H and optionally O are also considered edible carbohydrates. All modified starches are considered edible carbohydrates, including but not limited to phosphorylated and propylated starches. For purposes of this invention, edible carbohydrates include only those having a perceived sweetness less than five (5) times that of sucrose on an equal weight basis, assessed according to the paired comparison test described in the Examples.

Edible carbohydrates may be sweet or non-sweet. Both classes contain a large number of compounds, and a complete listing of either category is impractical. Examples of sweet carbohydrates include sucrose, fructose, dextrose, maltose, psicose and some sugar alcohols. For purposes of the invention, a "sweet carbohydrate" is an edible carbohydrate having a perceived sweetness at least 20% that of sucrose on an equal weight basis, assessed according to the paired comparison test described in the Examples. Thus, a "sweet carbohydrate" is at least 20% as sweet as sucrose, but less than five times as sweet. Exemplary carbohydrates generally regarded as non-sweet include starches, maltodextrin, non-sweet polyols, and polydextrose. Additional examples include soluble corn fiber, fibrous cellulose, microcrystalline cellulose, hemicellulose, and cellulose derivatives such as carboxymethyl cellulose, hydroxyethyl cellulose, hydroxypropyl cellulose and methyl cellulose. The skilled person will be aware of other sweet and non-sweet carbohydrates, and these will be understood to also be suitable edible carbohydrates for purposes of the invention.

Non-Carbohydrate Sweetener

Non-carbohydrate sweeteners include both natural and non-natural sweeteners, and they are not edible carbohydrates or derivatives thereof as defined above. Typically, they are high potency sweeteners, i.e., compounds whose perceived sweetness is at least five (5) times that of sucrose on an equal weight basis, assessed according to the paired comparison test described in the Examples. Exemplary non-natural, non-carbohydrate sweeteners include sucralose, aspartame, acesulfame-K, cyclamate, neotame, advantame and saccharin. Exemplary natural non-carbohydrate sweeteners include compounds found in Luo Han Guo (monk fruit) extracts. Luo Han Guo extracts are derived from the fruit of *Siraitia grosvenorii,* an herbaceous perennial vine native to southern China and Northern Thailand. It is one of four species in the genus *Siraitia.* Botanical synonyms include *Momordica grosvenorii* and *Thladiantha grosvenorii.* The extract is approximately 200-300 times as sweet as sucrose, due largely to the presence of various mogroside compounds. Typically, mogroside V is the most abundant single mogroside component of Luo Han Guo extracts, accompanied by other mogrosides such as mogrosides I, II, III, IV and VI as well as other extracted materials, such as polyphenols, flavonoids, melanoidins, terpenes, proteins, sugars, aromatic glycosides, and semi-volatile organic compounds.

Other natural non-carbohydrate sweeteners include sweet steviol glycosides extracted from the species *Stevia rebaudiana* (*"Stevia"*). Considerable research and development has been done to evaluate the use of sweet steviol glycosides of *Stevia* as non-caloric sweeteners. Sweet steviol glycosides that may be extracted from *Stevia* include the six rebaudiosides (i.e., rebaudiosides A to F), stevioside (the predominant glycoside in extracts from wild type *Stevia*)*,* steviolbioside, rubusoside, and dulcosides. Specific non-carbohydrate sweeteners include dulcoside A, rubusoside, monatin and its salts (monatin SS, RR, RS, SR), curculin, glycyrrhizic acid and its salts, thaumatin, monellin, mabinlin, brazzein, hernandulcin, phyllodulcin, glycyphyllin, and phloridzin. One exemplary commercially available non-carbohydrate sweetener is a commercially available sweetener composition containing a combination of monk fruit extract (Luo Han Guo extract) and stevia extract, available from Tate & Lyle under the trade name PUREFRUIT™ PLUS.

Solid Core

The solid core includes one or more edible carbohydrates, and may optionally also include one or more non-carbohydrate sweeteners. The edible carbohydrates will typically be water soluble, although they need not be. In some embodiments, the edible carbohydrates may include one or more sweet carbohydrates, for example sucrose, fructose, dextrose, maltose, psicose, some sugar alcohols or a combination of any of these. Optionally, other ingredients such as additional flavorants (e.g., cinnamon, vanilla, etc.) may also be included, but typically these will be absent. Advantageously, the core may consist essentially of sucrose.

Figure 1A shows one embodiment of a sweetener particle **10'** in which a solid core **12** consists of a single particle of edible carbohydrate. The first solid layer **14** is on the solid core **12,** and the second solid layer **16** is on the first solid layer **14** such that second solid layer **16** defines an outermost surface of sweetener particle **10.** Alternatively, as seen in Figure 1B, in some embodiments the solid core **12** comprises particles of the first edible carbohydrate bound together into an agglomerate by the same material that composes the first solid layer **14,** described below. Typically, the edible carbohydrate of the core will constitute at least about 10% of the particle by weight, or at least 20%, and typically no more than 99%, or no more than 95%.

First Solid Layer

The first solid layer includes one or more non-carbohydrate sweeteners, and may optionally include one or more edible carbohydrates. If present, the edible carbohydrates will typically be water soluble, although they need not be. In some embodiments, the edible carbohydrates include sweet carbohydrates, for example one or more of those listed above for use in the core. Sucrose is particularly useful. In some embodiments, the first solid layer consists essentially of the one or more non-carbohydrate sweeteners in combination with one or more sweet carbohydrates, particularly sucrose. Optionally, other ingredients such as additional flavorants (e.g., cinnamon, vanilla, etc.) may also be included, but typically these will be absent. The first solid layer need not cover the entire surface of the core. Typically, the first solid layer will constitute at least about 1% of the particle by weight, or at least 3%, or at least 5%, or at least 10%, and typically no more than 90%.

Second Solid Layer

The second solid layer includes one or more sweet carbohydrates, and optionally one or more other edible carbohydrates, but does not contain a non-carbohydrate sweetener. If present, the other edible carbohydrates will typically be water soluble, although they need not be. In some embodiments, the second solid layer completely encapsulates the first solid layer and the core, although this is not required and the coverage may not be complete. However, the second solid layer should cover at least 20%, or at least 30%, or at least 40%, or at least 50%, or at least 60%, or at least 70%, or at least 80%, or at least 90%, or at least 95% of the underlying surface, which as noted above includes the first solid layer and whatever portions of the core may not be covered by it. Typically, the second solid layer will constitute at least about 1% of the particle by weight, or at least 3%, or at least 5%, or at least 10%, or at least 20%, and typically no more than 95%, or no more than 90%.

In some embodiments of the invention, mixtures of particles may be used in which two or more different core compositions are employed. Similarly, two or more compositions of the first solid layer may be used, and two or more compositions of the second solid layer may be used. Thus, mixtures of particles having any or all of these variations may be used according to the invention, and can typically be provided by simply blending particles of different types.

Method of Making the Sweetener Particle

Sweetener particles according to the invention may be made by coating particles of the core material in sequences with the materials constituting the first and second layers, typically from a solution in an organic or aqueous solvent. The solvent may be the same or different for the first and second layers. Techniques for applying the coatings may for example include granulation, agglomeration, spray coating, Wurster coating, co-spray drying, foam spray-drying and the like. The particles may be of any size. In some embodiments, the size will be such that the product resembles ordinary table sugar in appearance. In such cases, the particles will typically have a mean particle size between 100 and 2000 $\mu$m, more typically between 150 and 1000 $\mu$m, as determined by screening. At least about 95 wt% of the composition can typically pass through a 3000 $\mu$m screen, more typically at least about 95 wt% will pass through a 1500 $\mu$m screen. If necessary the composition may be sieved to achieve this. Measurement of particle size may be performed on a laboratory screener, such as a RoTap® screener. The sweetener particles may optionally also comprise an anti-caking agent admixed with them, for example wheat flour, corn starch, calcium phosphate or the like in an amount effective to promote better handling and particle flow.

The sweetener particles may be used in tabletop applications or other topical applications, but they may also be used in other applications. The invention also provides food products containing the particles of the invention as a sweetener, along with one or more foodstuffs, including but not limited to breakfast cereals, cookies, cakes, pastries, chocolates, candies, etic. For example, a doughnut may be dusted with the particles in place of, or in addition to, confectioner's or powdered sugar. Other exemplary food products may include chewing gums (considered a food product for purposes of this invention) or other confections, and these may also incorporate sweetener particles according to the invention. Sweetener particles of the invention may also be used for making icings and for decorating foodstuffs.

The sweetener particles may also be combined with flavorants, flavor enhancers, additional sweeteners, and/or other food ingredients and employed in any of the applications mentioned in the immediately preceding paragraph and elsewhere herein. For example, the sweetener particles may be combined with one or more of the natural and/or non-natural non-carbohydrate sweeteners mentioned herein. Likewise, the sweetener particles and agglomerates described herein may be combined with improved taste products, such as, for example the glycoside compositions described in WO 2012/102769. Such combinations may be simple blends or mechanical mixtures of the sweetener particles of the invention with particles of the other materials, but any method of combination may be suitable and need not require blending or comingling the particles.

As can be seen in view of the foregoing disclosure, numerous embodiments of the invention may be recognized. In some embodiments of the first aspect, the sweet carbohydrate is selected from the group consisting of sucrose, fructose, dextrose, maltose and combinations of any of these.

In some embodiments of the first aspect, the sweet carbohydrate is sucrose.

In some embodiments, the optional second edible carbohydrate is present, and in some embodiments, it is not present..

In some embodiments, the first edible carbohydrates in the second aspect and the second edible carbohydrates in the first and second aspects are independently selected from sweet carbohydrates.

In some embodiments, the first edible carbohydrates in the second aspect and the second edible carbohydrates in the first and second aspects are independently selected from the group consisting of sucrose, fructose, dextrose, maltose and combinations of any of these.

In some embodiments of the second aspect, the first edible carbohydrate is sucrose.

In some embodiments of the first and second aspects, the second edible carbohydrate is sucrose.

In some embodiments of the first and second aspects, the non-carbohydrate sweetener is selected from the group consisting of natural non-carbohydrate sweeteners, non-natural non-carbohydrate sweeteners and mixtures of any of these.

In some embodiments of the first and second aspects, the non-carbohydrate sweetener consists of one or more natural non-carbohydrate sweeteners.

In some embodiments of the first and second aspects, the non-carbohydrate sweetener comprises mogroside V.

In some embodiments of the first and second aspects, the non-carbohydrate sweetener comprises a Luo Han Guo extract.

In some embodiments of the first and second aspects, the the non-carbohydrate sweetener comprises a Stevia extract.

In some embodiments of the first and second aspects, the solid core comprises particles of the first edible carbohydrate bound together by the same material that composes the first solid layer.

The invention also provides a food product comprising any sweetener particle as described herein one or more foodstuffs.

The invention also provides a first method of making sweetener particles, comprising in sequence the steps of

a) applying to a particulate core material consisting of a first edible carbohydrate that is psicose a solution of a non-carbohydrate sweetener and optionally a second edible carbohydrate in a first solvent, and removing the first solvent to form a first solid layer on the core material; and

b) applying to the product of a) a solution of a sweet carbohydrate in a second solvent and removing the second solvent to form a second solid layer on the first solid layer,

wherein the first and second edible carbohydrates may be the same or different, the first and second solvents may be the same or different, and wherein the solution of the sweet carbohydrate does not include a non-carbohydrate sweetener; wherein the sweet carbohydrate is at least 20% as sweet as sucrose, but less than five times as sweet as sucrose on an equal weight basis, assessed according to the paired comparison test described in the Examples.

The invention also provides a second method of making sweetener particles, comprising in sequence the steps of

a) applying to a particulate core material comprising a first edible carbohydrate a solution of a non-carbohydrate sweetener and optionally a second edible carbohydrate in a first solvent, and removing the first solvent to form a first solid layer on the core material; and

b) applying to the product of a) a solution consisting of a sweet carbohydrate that is psicose in a second solvent and removing the second solvent to form a second solid layer on the first solid layer, wherein the first and second edible carbohydrates may be the same of different, and wherein the first and second solvents may be the same or different.

EXAMPLES

Relative Sweetness Assessment

Determining that a sweetener has less than 5 times the sweetness of sucrose:

- Make solutions in neutral pH water of sucrose at 5 Brix and the test solution at 1 Brix. Perform sweetness paired comparison testing.
- If the test solution at 1 Brix is sweeter than sucrose at 5 Brix then the test sweetener is greater than 5 times the sweetness of sucrose.

Determining that a sweetener has at least 20% of the sweetness of sucrose:

- Make solutions in neutral pH water of test sweetener at 5 Brix and the sucrose solution at 1 Brix. Perform sweetness paired comparison.
- If the test solution at 5 Brix is sweeter than sucrose at 1 Brix then the test sweetener is at least 20% the sweetness of sucrose.

In both of the above methods, the sweetness paired comparison is performed as described below under Preparation and Comparison of Sweetener Particles, with the exception that the samples are tasted by sipping from cups rather than by dipping a finger in the sample and licking.

Preparation and Comparison of Sweetener Particles (not according to the invention)

First sweetener particles were made by coating sucrose (Domino Extra Fine Granular sugar) with a mixture of a non-carbohydrate sweetener and sucrose from an aqueous solution, using a Glatt ProCell 5 fluid-bed laboratory scale batch reactor (Glatt Air Techniques, Inc., Ramsey, NJ) with the AGT insert in bottom spray configuration. Second sweetener particles were prepared in the same way, but the coating with the non-carbohydrate sweetener was followed by coating with sucrose alone from an aqueous solution. A detailed example of the latter process is as follows.

Domino Extra Fine Granular sugar (882.6g) was placed into the fluid bed and coated with 420.7g of a solution consisting of 212.7g carbon-treated Luo Han Guo extract (26.28% ds), 112.5g sucrose, and 95.5g deionized water. The process was run under the following conditions:

| Product Temp. | 52°C |
|---|---|
| Air Volume | 80 m$^3$/hr |
| Atomization Air | 2.5 bar |
| Spray Rate | ~7.5g/min |

After the Luo Han Guo extract solution was sprayed on, a solution of 500g sucrose and 500g deionized water was sprayed. The sucrose solution was sprayed immediately following the Luo Han Guo extract solution after the Luo Han Guo extract solution had at least partially dried, without shutting down the process. The sucrose solution was added under the following conditions:

| Product Temp. | 52°C |
|---|---|
| Air Volume | 90 m$^3$/hr |
| Atomization Air | 3.0 bar |
| Spray Rate | ~12.0g/min |

After all of the solution was sprayed, the pump and heater were shut off and the product was dried for one minute. The finished product was then discharged from the chamber and sieved through a 14 mesh screen to remove large particles.

Using the above general procedure, first and second sweetener particles were prepared with each of two non-carbohydrate sweeteners. The first sweetener was a Luo Han Guo extract having a mogroside V content of about 50 wt%. This extract had been prepared from a commercially available Luo Han Guo extract having readily noticeable off-flavors, which had therefore been treated with activated carbon to significantly diminish these off-flavors. Thus, this sample of non-carbohydrate sweetener provided a relatively clean sweetness flavor under typical taste testing conditions.

The second non-carbohydrate sweetener was a commercially available sweetener composition containing a combination of monk fruit extract (Luo Han Guo extract) and stevia extract, available commercially from Tate & Lyle under the trade name PUREFRUIT™ PLUS.

Each of the second sweetener particle samples was evaluated relative to its respective comparative example (i.e., particles without an outer sucrose layer) via paired comparison testing for preference, sweetness and off-flavor, using a panel of non-professional taste testers. The tests were conducted as complete block designs with 40 evaluations and rotation of the presentation order. The samples were served in 2 ounce soufflé cups labeled with 3-digit codes. The panelists were instructed to either lick their finger, pick up some of the sample with their fingertip, and taste or to use a spoon for those who do not feel comfortable with the finger-tasting method. There was a one minute enforced waiting period between tests to clear the panelists palates. The panelists were asked to identify which sample they preferred, the sample that was sweeter and the sample that had more off-flavor. Bottled water and unsalted crackers were available for the panelists to clear their palates before and during testing.

The paired comparison tests for sweetness and off-flavor were analyzed with a standard binomial test at an alpha risk of 0.05 as two-tailed tests. The preference tests
were analyzed with the binomial test at an alpha risk of 0.05 as one-tailed tests, as shown below.

The results of the sweetness and preference questions were analyzed with the binomial test and the Thurstonian d' calculated. The p-value for a one-tailed binomial test is calculated as

$$1 - \sum_{k=0}^{c} \binom{n}{k} p_0^k (1 - p_0)^{n-k}$$

where c is the number of successes, n is the number of trials, and $p_0$ is the chance probability. A test is considered statistically significant when the p-value is less than the *a priori* set alpha risk. The two-tailed p-value is double the one-tailed p-value as calculated above.

Thurstonian d' is a linear measure of psychophysical difference. A d' = 1 is generally considered to be a just-noticeable-difference (JND) where a stimulus will be judged stronger in 75% of the trials. The Thurstonian d' is independent of test method and for paired comparison tests is calculated as

$$p_c = \Phi\left(d' / \sqrt{2}\right)$$

where $p_c$ is the proportion of successes, and $\Phi(\cdot)$ is the cumulative distribution function of the standard normal distribution. A complete treatment of these statistical calculations can be found in standard textbooks on the subject (Bi J., "Sensory Discrimination Tests and Measurements," Blackwell Publishing, 2006, Chapters 2 and 9).

Results of the paired comparisons for the particles employing carbon-treated Luo Han Guo and the monk fruit extract/stevia extract combination are shown in Tables 1 and 2, where sample 1 and sample 2 represent the second and first sweetener particles, respectively.

Table 1 - Luo Han Guo

|          | More Preferred | Sweeter | More Off-Flavor |
|----------|----------------|---------|-----------------|
| Sample 1 | 18             | 19      | 16              |
| Sample 2 | 22             | 21      | 24              |
| p-value  | 0.43           | 0.64    | 0.15            |
| d' value | -0.18          | -0.09   | -0.36           |

Table 2 - Monk fruit extract/stevia extract combination

|          | More Preferred | Sweeter | More Off-Flavor |
|----------|----------------|---------|-----------------|
| Sample 1 | 30             | 21      | 4               |
| Sample 2 | 10             | 19      | 36              |
| p-value  | 0.00           | 0.64    | 0.00            |
| d' value | 0.95           | 0.09    | -1.81           |

As seen in Table 2, the second sweetener particles based on monk fruit extract/stevia extract combination were significantly preferred (p-value <0.01) to the first sweetener particles (i.e., those lacking a sucrose outer layer). The second comparative sweetener also had a significantly lower intensity of off-flavor than the first comparative sweetener. The first and second comparative products were not significantly different in sweetness (p-value 0.64).

Table 1 evaluated first and second comparative particles employing a non-carbohydrate sweetener that had been treated to remove off-flavors. As expected in view of the very clean flavor of the Luo Han Guo sweetener used in their preparation, there were no statistically significant differences in preference, sweetness and off-flavor between the first and second comparative samples. In some embodiments, the particles show a statistically significant improvement in preference and/or perception of off-flavor relative to analogous particles of equal sweetness not comprising the second solid layer.

**Claims**

1. A sweetener particle comprising a solid core, a first solid layer on the solid core, and a second solid layer on the first solid layer, said second solid layer defining an outermost surface of the particle; wherein

   a) the solid core consists of a first edible carbohydrate that is psicose;
   b) the first solid layer comprises a non-carbohydrate sweetener and optionally a second edible carbohydrate which may be the same or different from the first edible carbohydrate; and
   c) the second solid layer comprises a sweet carbohydrate and does not include a non-carbohydrate sweetener;

   wherein the sweet carbohydrate is at least 20% as sweet as sucrose, but less than five times as sweet as sucrose on an equal weight basis, assessed according to the paired comparison test described in the Examples.

2. A sweetener particle comprising a solid core, a first solid layer on the solid core, and a second solid layer on the first solid layer, said second solid layer defining an outermost surface of the particle; wherein

   a) the solid core comprises a first edible carbohydrate;
   b) the first solid layer comprises a non-carbohydrate sweetener and optionally a second edible carbohydrate which may be the same or different from the first edible carbohydrate; and
   c) the second solid layer consists of a sweet carbohydrate that is psicose.

3. The sweetener particle of claim 1, wherein the sweet carbohydrate is selected from the group consisting of sucrose, fructose, dextrose, maltose and combinations of any of these.

4. The sweetener particle of claim 1, wherein the sweet carbohydrate is psicose.

5. The sweetener particle of any preceding claim, wherein the second edible carbohydrate is present.

6. The sweetener particle of claims 2-5, wherein the first and second edible carbohydrates are independently selected from sweet carbohydrates, or the sweetener particle of claims 1 or 3-5 wherein the second edible carbohydrate is independently selected from sweet carbohydrates; wherein the sweet carbohydrate(s) is/are at least 20% as sweet as sucrose, but less than five times as sweet as sucrose on an equal weight basis, assessed according to the paired comparison test described in the Examples.

7. The sweetener particle of claims 2, 5 and 6, wherein the first and second edible carbohydrates are independently selected from the group consisting of sucrose, fructose, dextrose, maltose and combinations of any of these.

8. The sweetener particle of claims 2, 5 and 6, wherein the first edible carbohydrate is psicose.

9. The sweetener particle of any preceding claim, wherein the second edible carbohydrate is psicose.

10. The sweetener particle of any preceding claim, wherein the solid core comprises particles of the first edible carbohydrate bound together by the same material that composes the first solid layer.

11. A food product comprising the sweetener particle of any preceding claim and one or more foodstuffs.

12. A method of making sweetener particles, comprising in sequence the steps of

    a) applying to a particulate core material consisting of a first edible carbohydrate that is psicose a solution of a non-carbohydrate sweetener and optionally a second edible carbohydrate in a first solvent, and removing the first solvent to form a first solid layer on the core material; and

b) applying to the product of a) a solution of a sweet carbohydrate in a second solvent and removing the second solvent to form a second solid layer on the first solid layer, wherein the first and second edible carbohydrates may be the same or different, the first and second solvents may be the same or different, and wherein the solution of the sweet carbohydrate does not include a non-carbohydrate sweetener;

wherein the sweet carbohydrate is at least 20% as sweet as sucrose, but less than five times as sweet as sucrose on an equal weight basis, assessed according to the paired comparison test described in the Examples.

13. A method of making sweetener particles, comprising in sequence the steps of

a) applying to a particulate core material comprising a first edible carbohydrate a solution of a non-carbohydrate sweetener and optionally a second edible carbohydrate in a first solvent, and removing the first solvent to form a first solid layer on the core material; and

b) applying to the product of a) a solution consisting of a sweet carbohydrate that is psicose in a second solvent and removing the second solvent to form a second solid layer on the first solid layer, wherein the first and second edible carbohydrates may be the same or different, the first and second solvents may be the same or different.

**Patentansprüche**

1. Süßstoffteilchen umfassend einen festen Kern, eine erste feste Schicht auf dem festen Kern und eine zweite feste Schicht auf der ersten festen Schicht, wobei die zweite feste Schicht eine äußerste Oberfläche des Teilchens definiert; wobei

a) der feste Kern aus einem ersten essbaren Kohlehydrat besteht, das Psicose ist;

b) die erste feste Schicht einen Nichtkohlehydratsüßstoff und wahlweise ein zweites essbares Kohlehydrat umfasst, das gleich oder verschieden von dem ersten essbaren Kohlehydrat sein kann; und

c) die zweite feste Schicht ein süßes Kohlehydrat umfasst und keinen Nichtkohlehydratsüßstoff umfasst;

wobei das süße Kohlehydrat mindestens 20 % so süß wie Sucrose, aber weniger als fünfmal so süß wie Sucrose, auf gleicher Gewichtsbasis, dem gepaarten Vergleichstest, der in den Beispielen beschrieben ist, entsprechend beurteilt, ist.

2. Süßstoffteilchen umfassend einen festen Kern, eine erste feste Schicht auf dem festen Kern und eine zweite feste Schicht auf der ersten festen Schicht, wobei die zweite feste Schicht eine äußerste Oberfläche des Teilchens definiert; wobei

a) der feste Kern ein erstes essbares Kohlehydrat umfasst;

b) die erste feste Schicht einen Nichtkohlehydratsüßstoff und wahlweise ein zweites essbares Kohlehydrat umfasst, das gleich oder verschieden von dem ersten essbaren Kohlehydrat sein kann; und

c) die zweite feste Schicht aus einem süßen Kohlehydrat besteht, das Psicose ist.

3. Süßstoffteilchen nach Anspruch 1, wobei das süße Kohlehydrat aus der Gruppe ausgewählt ist bestehend aus Sucrose, Fructose, Dextrose, Maltose und Kombinationen irgendwelcher von diesen.

4. Süßstoffteilchen nach Anspruch 1, wobei das süße Kohlehydrat Psicose ist.

5. Süßstoffteilchen nach einem der vorhergehenden Ansprüche, wobei das zweite essbare Kohlehydrat vorliegt.

6. Süßstoffteilchen nach den Ansprüchen 2-5, wobei das erste und das zweite essbare Kohlehydrat unabhängig unter süßen Kohlehydraten oder dem Süßstoffteilchen nach Anspruch 1 oder 3-5 ausgewählt werden, wobei das zweite essbare Kohlehydrat unabhängig unter süßen Kohlehydraten ausgewählt wird; wobei das/die süße(n) Kohlehydrat(e) mindestens 20 % so süß wie Sucrose, aber weniger als fünfmal so süß wie Sucrose, auf gleicher Gewichtsbasis, dem gepaarten Vergleichstest, der in den Beispielen beschrieben ist, entsprechend beurteilt, ist/sind.

7. Süßstoffteilchen nach den Ansprüchen 2, 5 und 6, wobei das erste und das zweite essbare Kohlehydrat unabhängig aus der Gruppe ausgewählt sind bestehend aus Sucrose, Fructose, Dextrose, Maltose und Kombinationen irgendwelcher von diesen.

8. Süßstoffteilchen nach den Ansprüchen 2, 5 und 6, wobei das erste essbare Kohlehydrat Psicose ist.

9. Süßstoffteilchen nach einem der vorhergehenden Ansprüche, wobei das zweite essbare Kohlehydrat Psicose ist.

10. Süßstoffteilchen nach einem der vorhergehenden Ansprüche, wobei der feste Kern Teilchen des ersten essbaren Kohlehydrats umfasst, die durch dasselbe Material, das die erste feste Schicht bildet, zusammengebunden sind.

11. Nahrungsmittelprodukt umfassend das Süßstoffteilchen nach einem der vorhergehenden Ansprüche und ein oder mehrere Nahrungsmittel.

12. Verfahren zur Herstellung von Süßstoffteilchen, umfassend nacheinander die Schritte des

a) Aufbringens, auf ein teilchenförmiges Kernmaterial, das aus einem ersten essbaren Kohlehydrat besteht, das Psicose ist, einer Lösung eines Nichtkohlehydratsüßstoffs und wahlweise eines zweiten essbaren Kohlehydrats in einem ersten Lösungsmittel und Entfernens des ersten Lösungsmittels, um eine erste feste Schicht auf dem Kernmaterial zu bilden; und

b) Aufbringens, auf das Produkt von a), einer Lösung eines süßen Kohlehydrats in einem zweiten Lösungsmittel und Entfernens des zweiten Lösungsmittels, um eine zweite feste Schicht auf der ersten festen Schicht zu bilden, wobei das erste und das zweite essbare Kohlehydrat gleich oder verschieden sein können, das erste und das zweite Lösungsmittel gleich oder verschieden sein können, und wobei die Lösung des süßen Kohlehydrats keinen Nichtkohlehydratsüßstoff umfasst;

wobei das süße Kohlehydrat mindestens 20 % so süß wie Sucrose, aber weniger als fünfmal so süß wie Sucrose, auf gleicher Gewichtsbasis, dem gepaarten Vergleichstest, der in den Beispielen beschrieben ist, entsprechend beurteilt, ist.

13. Verfahren zur Herstellung von Süßstoffteilchen, umfassend nacheinander die Schritte des

a) Aufbringens, auf ein teilchenförmiges Kernmaterial, das ein erstes essbares Kohlehydrat umfasst, einer Lösung eines Nichtkohlehydratsüßstoffs und wahlweise eines zweiten essbaren Kohlehydrats in einem ersten Lösungsmittel und Entfernens des ersten Lösungsmittels, um eine erste feste Schicht auf dem Kernmaterial zu bilden; und

b) Aufbringens, auf das Produkt von a), einer Lösung, die aus einem süßen Kohlehydrat besteht, das Psicose ist, in einem zweiten Lösungsmittel und Entfernens des zweiten Lösungsmittels, um eine zweite feste Schicht auf der ersten festen Schicht zu bilden, wobei das erste und das zweite essbare Kohlehydrat gleich oder verschieden sein können, das erste und das zweite Lösungsmittel gleich oder verschieden sein können.

**Revendications**

1. Particule édulcorante comprenant un noyau solide, une première couche solide sur le noyau solide, et une seconde couche solide sur la première couche solide, ladite seconde couche solide définissant une surface la plus externe de la particule; où

a) le noyau solide est constitué d'un premier hydrate de carbone comestible qui est du psicose;
b) la première couche solide comprend un édulcorant non-hydrate de carbone et éventuellement un second hydrate de carbone comestible qui peut être identique ou différent du premier hydrate de carbone comestible; et
c) la seconde couche solide comprenant un hydrate de carbone sucré et n'inclut pas d'édulcorant non-hydrate de carbone;

l'hydrate de carbone sucré étant au moins 20 % aussi sucré que le saccharose, mais inférieur à cinq fois aussi sucré que le saccharose sur une base égale en poids, évalué selon le test de comparaison apparié décrit dans les exemples.

2. Particule édulcorante comprenant un noyau solide, une première couche solide sur le noyau solide, et une seconde couche solide sur la première couche solide, ladite seconde couche solide définissant une surface la plus externe de la particule; où

a) le noyau solide comprend un premier hydrate de carbone comestible;
b) la première couche solide comprend un édulcorant non-hydrate de carbone et éventuellement un second hydrate de carbone comestible qui peut être identique ou différent du premier hydrate de carbone comestible; et
c) la seconde couche solide est constituée d'un hydrate de carbone sucré qui est le psicose.

3. Particule édulcorante selon la revendication 1, l'hydrate de carbone sucré étant sélectionné dans le groupe constitué du saccharose, du fructose, du dextrose, du maltose et des combinaisons de n'importe lesquels de ceux-ci.

4. Particule édulcorante selon la revendication 1, l'hydrate de carbone sucré étant le psicose.

5. Particule édulcorante selon l'une quelconque des revendications précédentes, le second hydrate de carbone comestible étant présent.

6. Particule édulcorante selon les revendications 2 à 5, le premier et le second hydrate de carbone comestible étant indépendamment sélectionné parmi les hydrates de carbone sucrés, ou la particule édulcorante selon les revendications 1 ou 3 à 5 où le second hydrate de carbone comestible est indépendamment sélectionné parmi les hydrates de carbone sucrés;
où le(s) hydrate(s) de carbone sucré(s) est/sont au moins 20 % aussi sucrés que le saccharose, mais moins de cinq fois aussi sucrés que le saccharose sur une base égale en poids, évalués selon le test de comparaison apparié décrit dans les exemples.

7. Particule édulcorante selon les revendications 2, 5 et 6, le premier et le second hydrate de carbone comestible étant indépendamment sélectionné dans le groupe constitué du saccharose, du fructose, du dextrose, du maltose et des combinaisons de n'importe lesquels de ceux-ci.

8. Particule édulcorante selon les revendications 2, 5 et 6, le premier hydrate de carbone comestible étant le psicose.

9. Particule édulcorante selon l'une quelconque des revendications précédentes, le second hydrate de carbone comestible étant le psicose.

10. Particule édulcorante selon l'une quelconque des revendications précédentes, le noyau solide comprenant des particules du premier hydrate de carbone comestible liées ensemble par le même matériau qui compose la première couche solide.

11. Produit alimentaire comprenant la particule édulcorante selon l'une quelconque des revendications précédentes et un ou plusieurs produits alimentaires.

12. Procédé de fabrication de particules édulcorantes, comprenant en séquence les étapes

a) d'application à un matériau formant noyau sous forme de particules constitué d'un premier hydrate de carbone comestible qui est le psicose d'une solution d'un édulcorant non-hydrate de carbone et éventuellement d'un second hydrate de carbone comestible dans un premier solvant, et l'élimination du premier solvant pour former une première couche solide sur le matériau formant noyau; et
b) l'application au produit de a) d'une solution d'un hydrate de carbone sucré dans un second solvant et l'élimination du second solvant pour former une seconde couche solide sur la première couche solide, le premier et le second hydrates de carbone comestibles pouvant être identiques ou différents, le premier et le second solvants pouvant être identiques ou différents, et la solution de l'hydrate de carbone sucré ne comprenant pas d'édulcorant non-hydrate de carbone;

l'hydrate de carbone sucré étant au moins 20 % aussi sucré que le saccharose, mais moins de cinq fois aussi sucré que le saccharose sur une base égale en poids, évalué selon le test de comparaison apparié décrit dans les exemples.

13. Procédé de fabrication de particules édulcorantes, comprenant en séquence les étapes

a) d'application à un matériau formant noyau sous forme de particules comprenant un premier hydrate de carbone comestible d'une solution d'un édulcorant non-hydrate de carbone et éventuellement d'un second hydrate de carbone comestible dans un premier solvant, et l'élimination du premier solvant pour former une première couche solide sur le matériau formant noyau; et

b) d'application au produit de a) d'une solution constituée d'un hydrate de carbone sucré qui est le psicose dans un second solvant et l'élimination du second solvant pour former une seconde couche solide sur la première couche solide, le premier et le second hydrate de carbone comestible pouvant être identiques ou différents, le premier et le second solvant pouvant être identiques ou différents.

FIG. 1A

FIG. 1B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011048616 A

- WO 2012102769 A

**Non-patent literature cited in the description**

- **BI J.** Sensory Discrimination Tests and Measurements. Blackwell Publishing, 2006